# EUROPÄISCHE PATENTANMELDUNG

(11) **EP 4 279 246 A1**
(43) Veröffentlichungstag der Anmeldung: **22.11.2023**
(21) Anmeldenummer: 23170523.7
(22) Anmeldetag: 28.04.2023
(51) Int. Cl.: B29C 45/27, B29C 45/53, B29C 45/54

(54) **VORRICHTUNG ZUM MIKROSPRITZGIESSEN**

(30) Priorität: 28.04.2022 DE 102022110443
(71) Anmelder: Kunststoff-Zentrum in Leipzig gemeinnützige Gesellschaft mbH, 04229 Leipzig (DE)
(72) Erfinder: Jacob, Steffen, 04179 Leipzig (DE); Jüttner, Gabor, 04229 Leipzig (DE); Jacob, Tino, 04107 Leipzig (DE)
(74) Vertreter: Findeisen Neumann Scheit Partnerschaft mbB

(57) **Zusammenfassung**

Die Erfindung betrifft eine Vorrichtung zum Mikrospritzgießen, aufweisend eine Plastifiziereinheit mit einem Schneckenkolben, zumindest zwei Kolbenspritzeinheiten mit einem Kolben, ein Kanalsystem als Schmelzeverteiler und ein Werkzeug mit zumindest zwei Kavitäten, wobei je eine Kolbenspritzeinheit je einer Kavität zugeordnet ist und wobei das Kanalsystem eine Schmelzezuleitung und zumindest zwei Dosierleitungen aufweist und wobei die Schmelzezuleitung einen Schmelzeaustritt der Plastifiziereinheit mit den Kolbenspritzeinheiten und je eine Dosierleitung je eine der Kolbenspritzeinheiten mit je einer der Kavitäten verbindet. Aufgabe der Erfindung ist es daher, die bekannten Lösungen dahingehend weiterzuentwickeln, dass die Schmelzezufuhr insbesondere zu hochfachigen Werkzeugen (acht oder mehr Kavitäten) für die Ausbildung von qualitativ hochwertigen Mikrospritzgussformteilen verbessert wird. Insbesondere soll die Gefahr einer Kunststoffdegradation in der Schmelzezufuhr verringert und die Dynamik bei der Befüllung der Kavitäten verbessert werden. Darüber hinaus soll auch die Befüllung unterschiedlich ausgeführter Kavitäten innerhalb eines Werkzeuges möglich sein. Diese Aufgabe wird dadurch gelöst, dass die Schmelzezuleitung (8) jeweils direkt über eine Kanalmündung (11) in die Dosierleitungen (9) mündet und dass der Kolben (4) der der jeweiligen Dosierleitung (9) zugeordneten Kolbenspritzeinheit (3) in der Dosierleitung (9) angeordnet und beim Kolbenhub an einer Innenwand der Dosierleitung (9) geführt ist und dass ein bezogen auf die Kolbenbewegung senkrecht gelegter Außenquerschnitt des Kolbens (4) kongruent zu einem Innenquerschnitt der Dosierleitung (9) ausgeführt ist und an dem Innenquerschnitt der Dosierleitung (9) anliegt und dass ein der Kavität (6c) zugewandtes Kolbenende der Kolben (4) in ihrer ersten Kolbenstellung in Flussrichtung der Schmelze hinter der jeweiligen Kanalmündung (11) angeordnet ist. (Fig. 5)

## Beschreibung

Die Erfindung betrifft eine Vorrichtung zum Mikrospritzgießen, aufweisend eine Plastifiziereinheit mit einem Schneckenkolben, zumindest zwei Kolbenspritzeinheiten mit einem Kolben, ein Kanalsystem als Schmelzeverteiler und ein Werkzeug mit zumindest zwei Kavitäten, wobei je eine Kolbenspritzeinheit je einer Kavität zugeordnet ist und wobei das Kanalsystem eine Schmelzezuleitung und zumindest zwei Dosierleitungen aufweist und wobei die Schmelzezuleitung einen Schmelzeaustritt der Plastifiziereinheit mit den Kolbenspritzeinheiten und je eine Dosierleitung je eine der Kolbenspritzeinheiten mit je einer der Kavitäten verbindet.

Zur Fertigung spritzgegossener Kunststoffformteile wird der Kunststoff in entsprechend der Formteile ausgestaltete Kavitäten eines Werkzeuges eingespritzt. Eine Hochskalierung zur Massenfertigung erfolgt wahlweise über die Erhöhung der Anzahl der Produktionsmaschinen bei relativ geringer Fachzahl der Werkzeuge (geringe Anzahl Kavitäten), oder durch Verwendung von hochfachigen Werkzeugen an wenigen großen Maschinen (viele Kavitäten je Werkzeug). Ersteres bietet eine höhere Prozesssicherheit und geringere Ausfallwahrscheinlichkeit bei höherem finanziellen (Anzahl der Maschinen und Werkzeuge) und organisatorischen (Validierung der Produktionseinheiten, Wartung und Planung) Aufwand. Tendenziell wird in Europa die hochfachige Produktionsmethode in Erwartung der internationalen Konkurrenzfähigkeit bei den gegebenen Lohnniveaus angestrebt. Im Bereich des Mikrospritzgießen stößt dieser Ansatz gegenwärtig allerdings auf Seiten der Maschinen- und Werkzeugtechnik an Grenzen. Mit Mikrospritzgießen ist das Kunststoffspritzgießen von Formteilen gemeint, deren Gewicht unterhalb von etwa einem Gramm liegt.

Derzeitige Spritzgießmaschinen zum Mikrospritzgießen weisen eine Plastifiziereinheit in Form eines Schneckenkolbens auf. In diesem Schneckenkolben wird der Kunststoff plastifiziert und in der Regel über ein Heißkanalsystem zu den Kavitäten des Werkzeugs der Spritzgießmaschine geführt. Hochfachige Werkzeugausführungen können nicht mit dem zur Verfügung stehenden Werkzeugraum realisiert werden und sind auch mit der zur Verfügung stehenden Schmelzemenge der Plastifiziereinheit meist nicht zu vereinbaren. Selten kann ein Werkzeug mit acht Kavitäten ausgeführt werden. Generell lassen sich die herkömmlichen Spritzgießmaschinen auf Grund der kleinen benötigten Schussvolumina nicht optimal für das Mikrospritzgießen einsetzen. Lange Verweilzeiten des Kunststoffs in der Plastifiziereinheit und im Heißkanalsystem des Werkzeugs führen zum Abbau des Materials. Zusätzlich ist die erforderliche Präzision und Reproduzierbarkeit bei der Vorfahrbewegung der Schnecke in der Einspritzphase nur schwer zu erreichen. Auch die Einspritzgenauigkeit ist bei der Vorfahrbewegung der Schnecke durch die Rückstromsperre begrenzt. Somit befindet man sich bei sehr hohen Stückzahlanforderungen in einem Dilemma. Auf der einen Seite möchte man nicht auf die Präzision des Einspritzens, welche heutige Mikrospritzgießmaschinen bieten, verzichten und auf der anderen Seite möchte man nicht zur Realisierung von hohen Ausbringraten mehrere Maschinen und Werkzeuge im Mikrospritzguss einsetzen. Demnach werden, wie eingangs beschrieben, konventionelle Kleinmaschinen mit hochfachigen Werkzeugen für die Produktion ausgerüstet. Dabei verzichtet man mit den zur Verfügung stehenden Spritzeinheiten größtenteils auf die direkte Beeinflussung der Formfüllung der Kavität und damit auf eine präzisere und reproduzierbare Abformung der Mikroformteile.

Aus dem Stand der Technik sind Spritzgussmaschinen bekannt, bei denen eine als Schneckenkolben ausgestaltete Plastifiziereinrichtung mit zwei oder mehreren Kolbenspritzeinheiten kombiniert ist, wobei die Plastifiziereinrichtung und die Kolbenspritzeinheiten über einen als Kanalsystem ausgestalteten Schmelzeverteiler miteinander verbunden sind. Dabei verbindet eine Schmelzezuleitung des Kanalsystems die Plastifiziereinheit mit Eingängen der Kolbenspritzeinheiten. Ausgänge der Kolbenspritzeinheiten sind wiederum jeweils mit einer Dosierleitung des Kanalsystems verbunden. Die werkzeugseitigen Enden der Dosierleitungen münden dann jeweils in eine Kavität eines Werkzeuges der Spritzgussmaschine. Mit der Plastifiziereinrichtung wird die Kunststoffschmelze dem Kanalsystem zugeführt. Zum Befüllen der Kavitäten wird dann die Kunststoffschmelze mit den Kolbenspritzeinheiten in den Dosierleitungen gefördert und damit in die Kavitäten geführt. Hierzu werden die Kolben der Kolbenspritzeinheiten mit einem Kolbenhub von einer ersten Kolbenstellung in eine zweite Kolbenstellung überführt, wobei sie dabei jeweils in einem Zylinder der Kolbenspritzeinheiten geführt werden. Derartige Spritzgussmaschinen sind beispielsweise aus DE 699 36 814 T2, US 5 833 899 A und WO 2011/081694 A1 bekannt. Diese Lösungen haben sich zwar grundsätzlich bewährt. Im Bereich des Mikrospritzgießens weisen diese allerdings eine Reihe Nachteile auf, wodurch sie für das Mikrospritzgießen ungeeignet sind.

Bei den Lösungen aus DE 699 36 814 T2 und WO 2011/081694 A1 sind die Querschnitte der Kolbenspritzeinheiten deutlich größer als die Querschnitte der anschließenden Dosierleitungen, sodass durch das Befüllen von Schmelzereservoirs vor den Kolben der Kolbenspritzeinheiten gegen das "First In - First Out" Prinzip bei der Schmelzeförderung durch den Schmelzeverteiler verstoßen wird. Damit ist nicht sichergestellt, dass ein Schmelzevolumen, welches von der Plastifiziereinheit in den Schmelzeverteiler gelangt auch vor einem nächsten von der Plastifiziereinheit in den Schmelzeverteiler zugeführten Schmelzevolumen von der Kolbenspritzeinheit in die jeweilige Kavität gefüllt wird. Damit besteht insbesondere die Gefahr von zirkulierender Schmelze in den Schmelzereservoirs, was mit einer Degradation des Kunststoffes (Polymerabbau) über die Zeit verbunden sein kann.

Weiterhin sind bei den Lösungen aus DE 699 36 814 T2 und WO 2011/081694 A1 sowie US 5 833 899 A insbesondere die Schmelzeverteiler sehr groß dimensioniert, was in langen Schmelzewegen sowohl zwischen Plastifiziereinheit und Kolbenspritzeinheiten als auch zwischen Kolbenspritzeinheiten und Kavitäten resultiert. Da Kunststoffschmelzen kompressibel sind, wird bei langen Schmelzwegen der von der Plastifiziereinheit und den Kolbenspritzeinheiten erzeugte Druck verzögert, was wiederum die Dynamik der Schmelzebewegung im Formteil und die Regelbarkeit des Füllprozesses verringert. Bei hochfachigen Werkzeugen kann dies insbesondere in einer ungleichmäßigen Befüllung der Kavitäten resultieren.

Darüber hinaus sind bei den Lösungen aus DE 699 36 814 T2 und WO 2011/081694 A1 sowie US 5 833 899 A bewegliche Ventilausführungen im Schmelzeverteiler zur Regelung der Dosierung vorgesehen. Die Dichtungen der Ventilflächen sind in der Regel maßlich auf einen Temperaturpunkt und damit auf einen bestimmten Kunststoff ausgelegt. Schwanken die Temperaturen kann es an den Dichtstellen zu Schmelzeaustritt kommen, der die Funktionalität im Prozess schwer beeinträchtigt.

Bei den Lösungen aus DE 699 36 814 T2 und US 5 833 899 A sind die Kolben der Kolbenspritzeinheiten über eine angetriebene Einspritzplatte miteinander gekoppelt. Eine individuelle Regelung der Kolbenhübe ist damit nicht möglich, was eine individuelle Steuerung der Schmelzemengen am Eintritt in die Kavitäten verhindert.

Aufgabe der Erfindung ist es daher, die bekannten Lösungen dahingehend weiterzuentwickeln, dass die Schmelzezufuhr insbesondere zu hochfachigen Werkzeugen (acht oder mehr Kavitäten) für die Ausbildung von qualitativ hochwertigen Mikrospritzgussformteilen verbessert wird. Insbesondere soll die Gefahr einer Kunststoffdegradation in der Schmelzezufuhr verringert und die Dynamik bei der Befüllung der Kavitäten verbessert werden. Darüber hinaus soll auch die Befüllung unterschiedlich ausgeführter Kavitäten innerhalb eines Werkzeuges möglich sein.

Diese Aufgabe wird mit einer Vorrichtung zum Mikrospritzgießen mit den Merkmalen des Anspruchs 1 gelöst. Erfindungsgemäß ist das Kanalsystem dieser Vorrichtung so ausgebildet, dass die Schmelzezuleitung jeweils direkt über eine Kanalmündung in die Dosierleitungen mündet. Der Kolben zur Förderung der Schmelze ist direkt in der jeweiligen Dosierleitung integriert und bei seiner Bewegung zwischen der ersten und zweiten Kolbenstellung (Kolbenhub) an einer Innenwand der Dosierleitung geführt. Bezogen auf die Kolbenbewegung liegt hierzu ein senkrecht gelegter Außenquerschnitt des Kolbens an einem Innenquerschnitt der Dosierleitung an, wobei der Außenquerschnitt des Kolbens kongruent zum Innenquerschnitt der Dosierleitung ausgeführt ist. Ein der Kavität zugewandtes Kolbenende der Kolben in ihrer ersten Kolbenstellung ist in Flussrichtung der Schmelze hinter der jeweiligen Kanalmündung angeordnet. In der zweiten Kolbenstellung der Kolben ist das der Kavität zugewandte Kolbenende der Kolben in Flussrichtung der Schmelze vor der Kanalmündung angeordnet. Die Ausdehnung der Kolben entlang deren Bewegungsrichtung ist so ausgeführt, dass beim Übergang der Kolben von ihrer ersten Kolbenstellung in ihre zweite Kolbenstellung die jeweilige Kanalmündung durch die Mantelfläche des Kolbens verschlossen ist. Die Plastifiziereinheit mit dem Schneckenkolben ist den zumindest zwei Kolbenspritzeinheit gemeinsam zugeordnet und speist beide diesen Kolbenspritzeinheiten zugeordneten Dosierleitungen des Kanalsystems.

Da der Außenquerschnitt des Kolbens kongruent zum Innenquerschnitt der Dosierleitung ausgeführt und der Kolben in der zweiten Kolbenstellung mit seinem der Kavität zugewandten Kolbenende in Flussrichtung der Schmelze vor der Kanalmündung angeordnet ist, wird sichergestellt, dass beim Dosiervorgang (Kolbenhub von erster Kolbenstellung in zweite Kolbenstellung) die gesamte zuvor von der Plastifiziereinheit über die Kanalmündung zum Kolben geführte Schmelze vollständig in die Dosierleitung gefördert wird. In einer nachgelagerten weiteren Zuführung von Schmelze von der Plastifiziereinheit über die Kanalmündung wird diese weitere Schmelze dann in Flussrichtung hinter der zuvor in der Dosierleitung geförderten Schmelze angereiht. Erfindungsgemäß werden Schmelzereservoirs an den Kolben der Kolbenspritzeinheiten vermieden, sodass insbesondere die Gefahr von zirkulierender Schmelze in Schmelzereservoirs unterbunden und somit eine Degradation des Kunststoffes (Polymerabbau) über die Zeit reduziert wird. Im Ergebnis wird damit bei der Förderung der Schmelze das "First In - First Out" Prinzip" eingehalten. Auch die Dynamik beim Einspritzen in die Kavitäten ist verbessert, da Druckverluste in Schmelzereservoirs aufgrund der Kompressibilität der Kunststoffschmelze verringert werden.

Da die Kolben selbst die jeweilige Kanalmündung beim Übergang von ihrer ersten Kolbenstellung in ihre zweite Kolbenstellung verschließen, können aufwendige Ventile im Kanalsystem entfallen, die ein Zurückdrücken der Schmelze von der Dosierleitung in die Schmelzezuleitung beim Kolbenhub verhindern sollen. Durch diesen einfachen Aufbau können verschiedene Kunststoffe in einem ähnlichen Verarbeitungstemperaturbereich (Delta T von ca. 70°C) ohne Probleme verarbeitet werden. Der Verzicht auf bewegliche Ventilausführungen im Schmelzeverteiler zur Regelung der Dosierung bietet eine höhere Ausfallsicherheit und einen robusten Verarbeitungsprozess.

In einer vorteilhaften Ausführung weist der Innenquerschnitt der Dosierleitung eine Ausdehnung von 2 mm bis 7 mm, vorzugsweise 3 mm bis 5 mm, auf. Derartig dimensionierte Dosierleitungen ermöglichen kleine für das Mikrospritzgießen erforderliche Schussvolumina von ca. 10 mm³ bis 200 mm³ und erhöhen damit die Einspritzpräzision an jeder Kavität. Somit wird die Regelbarkeit und damit die Beherrschbarkeit des Füllvorganges insbesondere in kleinen Kavitäten bedeutend verbessert.

In einer weiteren vorteilhaften Ausführung ist die Schmelzezuleitung an den Kanalmündungen zu den Dosierleitungen in Richtung Dosierleitung verjüngt. Die damit einhergehende Querschnittsverengung der Schmelzezuleitung verringert ein Rückfließen der Schmelze insbesondere zu Beginn des Kolbenhubs, was wiederum den Druck in den Dosierleitungen aufrechterhält und damit die Einspritzdynamik erhalten bleibt.

Es wird vorgeschlagen, dass die Dosierleitungen am Übergang zur Kavität in Richtung Kavität verjüngt sind. Auch hier wird durch die Querschnittsverengung der Dosierleitung ein Rückfließen der Schmelze aus der Kavität insbesondere beim Beenden des Kolbenhubs vermieden.

Eine vorteilhafte Ausgestaltung sieht vor, dass die Kolben der Kolbenspritzeinheiten von einzeln ansteuerbaren servoelektrischen Einspritzantrieben angetrieben sind. Dies ermöglicht für die Füllung der Kavitäten eine individuelle Einspritzregelung mit mikrospritzgießtypischer Fülldynamik.

In einer vorteilhaften Ausgestaltung ist eine Geschwindigkeit der Kolbenhübe der Kolben und/oder ein Kolbenweg der Kolben zur Ausführung der Kolbenhübe bei den Kolbenspritzeinheiten unabhängig voneinander steuerbar. Dies ermöglicht insbesondere das Einspritzen in Werkzeuge, deren Kavitäten sich in Form und/oder Volumen voneinander unterscheiden (sogenannte Familienwerkzeuge).

Es wird vorgeschlagen, die Schmelzezuleitung, die Dosierleitungen und die Kolben in einer Adapterplatte der Vorrichtung zum Mikrospritzgießen zu integrieren. Diese Adapterplatte ist vorteilhafterweise so ausgeführt, dass eine Schmelzeintrittsöffnung der Adapterplatte mit dem Schmelzeaustritt der Plastifiziereinheit verbunden ist und dass ein der jeweiligen Kavität zugewandtes Ende der Dosierleitungen eine mit der jeweiligen Kavität verbundenen Schmelzeaustrittsöffnung der Adapterplatte bildet. Eine derartige zwischen Werkzeug und Plastifiziereinheit angeordnete Adapterplatte kann mit geringem Aufwand getauscht werden. Beispielsweise kann eine für ein Temperaturregime ausgelegte Adapterplatte mit Kanalsystem durch eine für ein anderes Temperaturregime ausgelegte Adapterplatte mit entsprechendem Kanalsystem in einfacher Weise getauscht werden. Darüber hinaus bietet die Integration des Kanalsystems mit den Kolbenspritzeinheiten in einer Adapterplatte grundsätzlich die Möglichkeit, ein bereits bestehendes (mehrfachiges) Werkzeug mit einer bereits existierenden (nur mit einer Plastifiziereinheit versehenen) Spritzgießanlage zu verknüpfen.

Weiterhin wird vorgeschlagen, dass die Adapterplatte mit der Schmelzezuleitung und den Dosierleitungen mittels generativer Fertigung gebildet ist. Mit einer generativen Fertigung sind insbesondere Kanäle mit kleinen Querschnitten in einfacher Weise herstellbar.

Mit der erfindungsgemäßen Vorrichtung kann eine von der Plastifiziereinheit bereitgestellte Kunststoffschmelze aktiv und individuell in mehrere (auch sich unterscheidende) Werkzeugkavität (Mikrokavität) dynamisch eingespritzt werden. Insbesondere ist diese Einspritzung bei hochfachigen Werkzeugen (acht oder mehr Kavitäten) vorteilhaft. Gerade für hochfachige Werkzeuge, die eine verhältnismäßig große laterale Verteilung der Kavitäten aufweisen, ist die erfindungsgemäße Vorrichtung vorteilhaft, sodass mit der erfindungsgemäßen Vorrichtung eine Stückzahlhöherskalierung bei der Fertigung von Mikroformteilen in Verbindung mit hochfachigen Werkzeugen möglich ist.

Nachfolgend wird ein Ausführungsbeispiel der Erfindung anhand der Zeichnungen erläutert. Es zeigen:
- Fig. 1: eine Seitenansicht eines Querschnitts einer Ausführung einer erfindungsgemäßen Vorrichtung zum Mikrospritzgießen
- Fig. 2: Detailansicht der Fig. 1
- Fig. 3: die Vorrichtung aus Fig. 2 mit geschlossenem Werkzeug 6
- Fig. 4: die Vorrichtung aus Fig. 3 mit den Kolben in ihrer Zwischenstellung
- Fig. 5: die Vorrichtung aus Fig. 4 mit den Kolben in ihrer zweiten Kolbenstellung
- Fig. 6: die Vorrichtung aus Fig. 5 mit rückgezogenen Kolben
- Fig. 7: die Vorrichtung aus Fig. 6 mit teilweise wiederbefüllten Dosierleitungen
- Fig. 8: die Vorrichtung aus Fig. 7 mit vollständig wiederbefüllten Dosierleitungen
- Fig. 9: die Vorrichtung aus Fig. 8 mit den Kolben in ihrer zweiten Kolbenstellung
- Fig. 10: die Vorrichtung aus Fig. 9 mit geöffnetem Werkzeug
- Fig.11: die Vorrichtung aus Fig. 10 mit ausgefahrener Auswurfvorrichtung
- Fig. 12: die Vorrichtung aus Fig. 11 ausgeworfenen Formteilen

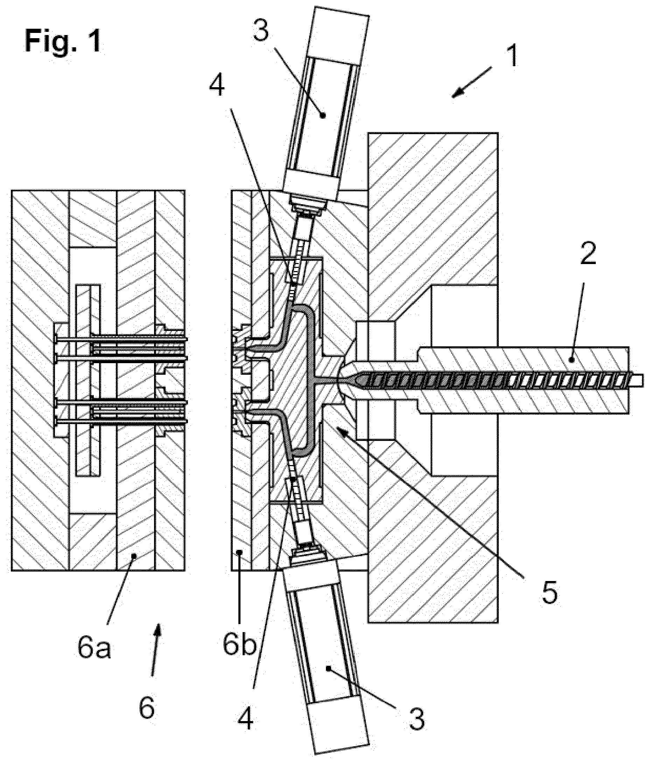

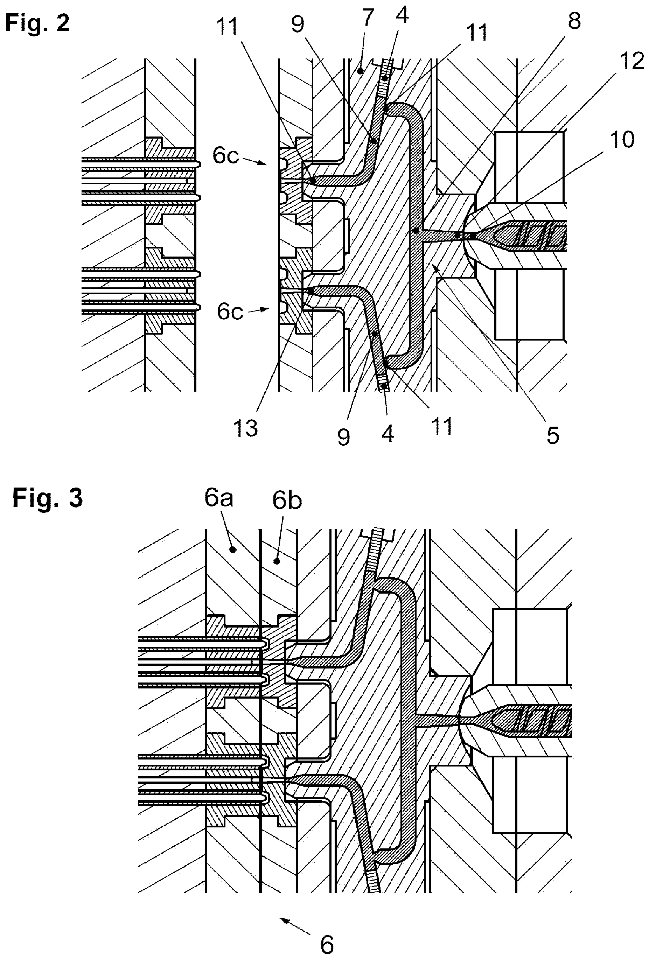

**Fig. 1** zeigt in einer Seitenansicht einen Querschnitt einer Ausführung einer erfindungsgemäßen Vorrichtung 1 zum Mikrospritzgießen. Die Vorrichtung 1 weist eine Plastifiziereinheit 2 mit einem Schneckenkolben, zwei Kolbenspritzeinheiten 3 mit je einem Kolben 4, ein Kanalsystem 5 als Schmelzeverteiler und ein Werkzeug 6 mit zwei Kavitäten 6c (Fig. 2) auf. Je eine Kolbenspritzeinheit 3 ist dabei je einer Kavität 6c des Werkzeuges 6 zugeordnet. In der Darstellung ist das Werkzeug 6 geöffnet, sodass ein oberes Werkzeugteil 6a zu einem unteren Werkzeugteil 6b beabstandet ist. Die beiden Kolben 4 sind jeweils mit einem servoelektrischen Einspritzantrieb der Kolbenspritzeinheit 3 verbunden, welcher den Kolben 4 entlang seiner Längsrichtung verschiebt. Die Einspritzantriebe der beiden gezeigten Kolbenspritzeinheiten 3 sind voneinander unabhängig ansteuerbar.

Mit der gezeigten Vorrichtung 1 wird in der Plastifiziereinheit 2 beispielsweise aus einem Kunststoffgranulat eine Kunststoffschmelze gebildet, die über das Kanalsystem 5 zu den Kavitäten 6c des Werkzeuges 6 geführt wird. Eine Flussrichtung der Schmelze führt also von der Plastifiziereinheit 2 zum Werkzeug 6.

**Fig. 2** zeigt eine Detailansicht der **Fig. 1****.** Das Kanalsystem 5 ist bei der gezeigten Ausführung in eine zwischen Plastifiziereinheit 2 und Werkzeug 6 angeordnete Adapterplatte 7 integriert und weist eine Schmelzezuleitung 8 und zwei Dosierleitungen 9 auf. Die Schmelzezuleitung 8 führt von einem Schmelzeaustritt 10 der Plastifiziereinheit 2 über eine Aufgabelung zu beiden Dosierleitungen 9, wo die Schmelzezuleitung 8 jeweils direkt über eine Kanalmündung 11 in die Dosierleitungen 9 einmündet. Je einer der Kolben 4 ist in je einer der beiden Dosierleitungen 9 angeordnet, wobei sich die Kolben in **Fig. 2** in einer ersten Kolbenstellung befinden. In dieser ersten Kolbenstellung sind die der jeweiligen Kavität 6c zugewandten Kolbenenden der Kolben 4 in ihrer ersten Kolbenstellung in Flussrichtung der Schmelze hinter der jeweiligen Kanalmündung 11 angeordnet. In dieser Stellung der Kolben 4 sind die Kanalmündungen 11 freigegeben, sodass Schmelze aus der Schmelzezuleitung 8 in die Dosierleitungen 9 fließen kann.

Die Schmelzezuleitungen sind an den Kanalmündungen zu den Dosierleitungen in Richtung Dosierleitung verjüngt. Allerdings ist dies nicht zwingend. Auch die Dosierleitungen sind am Übergang zur Kavität 6c in Richtung Kavität 6c verjüngt, was ebenfalls nicht zwingend ist.

Eine Schmelzeintrittsöffnung 12 der Adapterplatte 7 wird durch ein der Plastifiziereinheit 2 zugewandtes Ende der Schmelzezuleitung 8 gebildet und ist mit dem Schmelzeaustritt 10 der Plastifiziereinheit 2 verbunden. Ein der jeweiligen Kavität 6c zugewandtes Ende der Dosierleitungen 9 bildet eine Schmelzeaustrittsöffnung 13 der Adapterplatte 7, wobei diese Schmelzeaustrittsöffnungen 13 mit der jeweiligen Kavität 6c verbunden sind.

Die Adapterplatte mit der Schmelzezuleitung und den Dosierleitungen ist mittels generativer Fertigung gebildet. Die Erfindung ist aber nicht auf derartige ausgeführte Adapterplatten beschränkt.

In **Fig. 2** sind sowohl die Schmelzezuleitung 8 als auch die Dosierleitungen 9 mit Kunststoffschmelze gefüllt, was den Ausgangspunkt zur Füllung der Kavitäten 6c bildet.

Zunächst wird das Werkzeug 6 geschlossen. **Fig. 3** zeigt die Vorrichtung aus **Fig. 2** mit geschlossenem Werkzeug 6, wobei hierzu die beiden Werkzeugteile 6a, 6b aufeinanderliegen und die Kavitäten 6c einschließen.

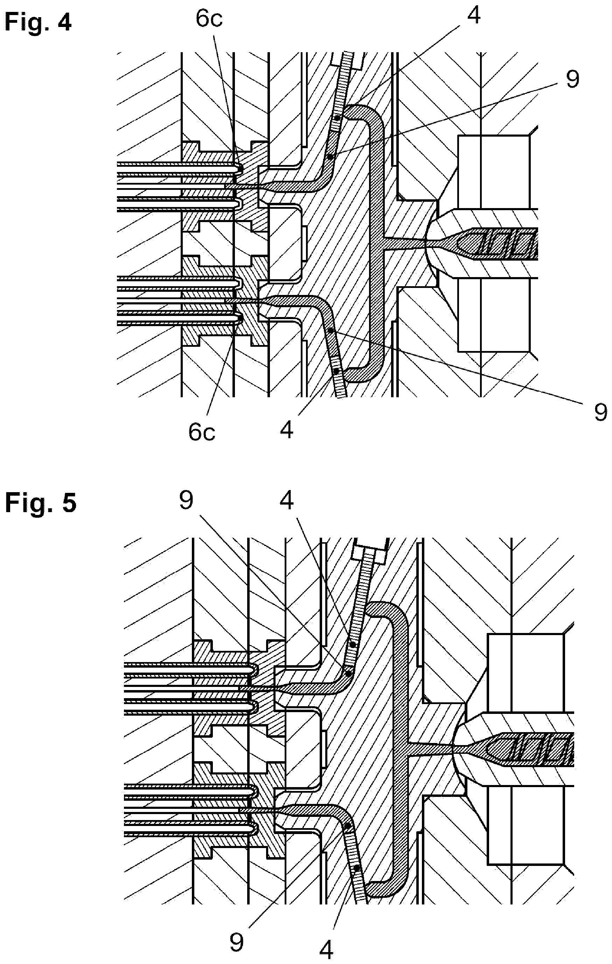

Im nächsten Schritt werden die Kolben 4 mit einem Kolbenhub durch die Einspritzantriebe von ihrer ersten Kolbenstellung in eine zweite Kolbenstellung überführt (vgl. **Fig. 4**). Mit dieser Kolbenbewegung wird die in den Dosierleitungen 9 befindliche Schmelze in Richtung Kavitäten 6c gefördert. In **Fig. 4** befinden sich die Kolben 4 in einer Zwischenstellung zwischen der ersten und zweiten Kolbenstellung. Die Kavitäten 6c sind hier teilweise mit Schmelze gefüllt. Bei der Bewegung der Kolben 4 werden diese an einer Innenwand der Dosierleitungen 9 geführt. Bezogen auf die Kolbenbewegung ist ein senkrecht gelegter Außenquerschnitt der Kolben 4 kongruent zu einem Innenquerschnitt der jeweiligen Dosierleitungen 9 ausgeführt, wobei der Außenquerschnitt des Kolbens 4 an dem Innenquerschnitt der Dosierleitung 4 anliegt. Durch diese Ausführung der Querschnitte wird sichergestellt, dass die Schmelze bei der Bewegung der Kolben 4 gefördert wird. Beispielsweise kann die Dosierleitung 9 einen kreisrunden Innenquerschitt und der Kolben 4 einen hierzu kongruenten Außenquerschnitt aufweisen, wobei sichergestellt ist, dass der Kolben 4 in der Dosierleitung 9 bewegbar ist und gleichzeitig die aneinander liegenden Flächen zwischen Innenwand der Dosierleitung 9 und Außenmantel des Kolbens 4 abgedichtet werden. Ebenso können der Innenquerschnitt und der Außenquerschnitt auch oval ausgestaltet sein. Die Erfindung ist aber nicht auf kreisrunde oder ovale Querschnitte beschränkt.

Die jeweilige Kanalmündung 11 wird beim Übergang der Kolben 4 von ihrer ersten Kolbenstellung in ihre zweite Kolbenstellung durch die Mantelfläche des Kolbens verschlossen. In der Zwischenstellung der Kolben 4 ist das der Kavität 6c zugewandte Kolbenende der Kolben in Flussrichtung der Schmelze nun vor der Kanalmündung angeordnet.

Die Darstellung der Vorrichtung in **Fig. 5** zeigt die Kolben 4 in ihrer zweiten Kolbenstellung. Gegenüber der Zwischenstellung aus **Fig. 4** sind die Kolben weiter in Richtung jeweiliger Kavität 6c verschoben, sodass weitere Schmelze in den Dosierleitungen 9 zu den Kavitäten 6c gefördert wird und die Kavitäten 6c nun vollständig gefüllt sind. In der zweiten Kolbenstellung der Kolben 4 ist das der Kavität 6c zugewandte Kolbenende der Kolben in Flussrichtung der Schmelze weiterhin vor der Kanalmündung angeordnet.

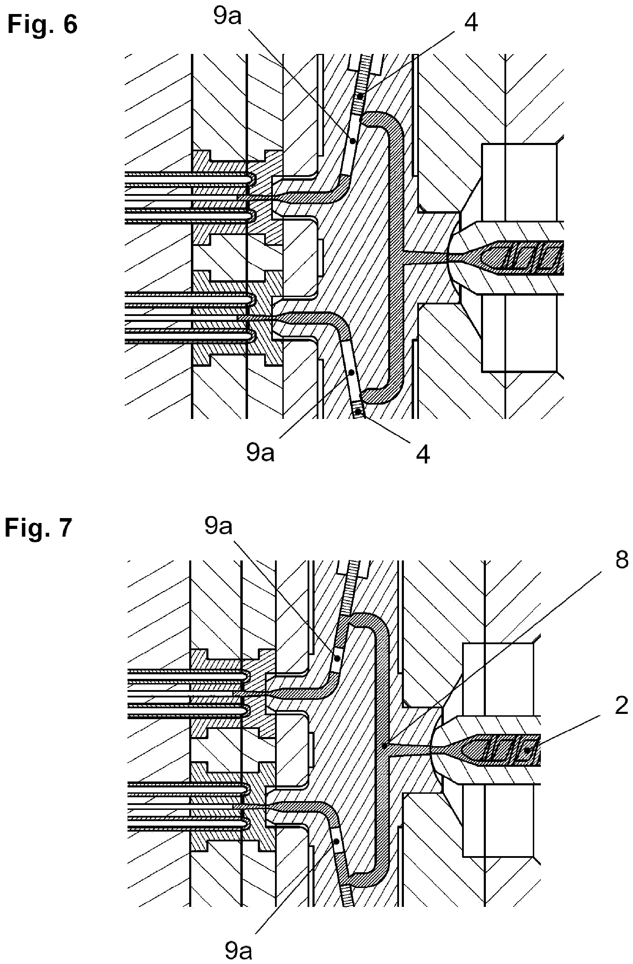

Nach der Füllung der Kavitäten 6c werden die Kolben 4 von den Einspritzantrieben aus ihrer zweiten Kolbenstellung wieder in Richtung erste Kolbenstellung überführt (vgl. **Fig. 6**). Die Kolben 4 werden solange bewegt, bis sich deren der Kavität 6c zugewandtes Ende wieder in Flussrichtung der Schmelze hinter der jeweiligen Kanalmündung befindet und damit die Kanalmündungen wieder geöffnet sind. In **Fig. 6** befinden sich die Kolben 4 noch nicht in ihrer ursprünglichen ersten Kolbenstellung, sondern noch etwas näher an den Kanalmündungen 11. Beim Rückführen der Kolben 4 verbleibt ein Abschnitt 9a der Dosierleitungen 9 ohne Schmelze.

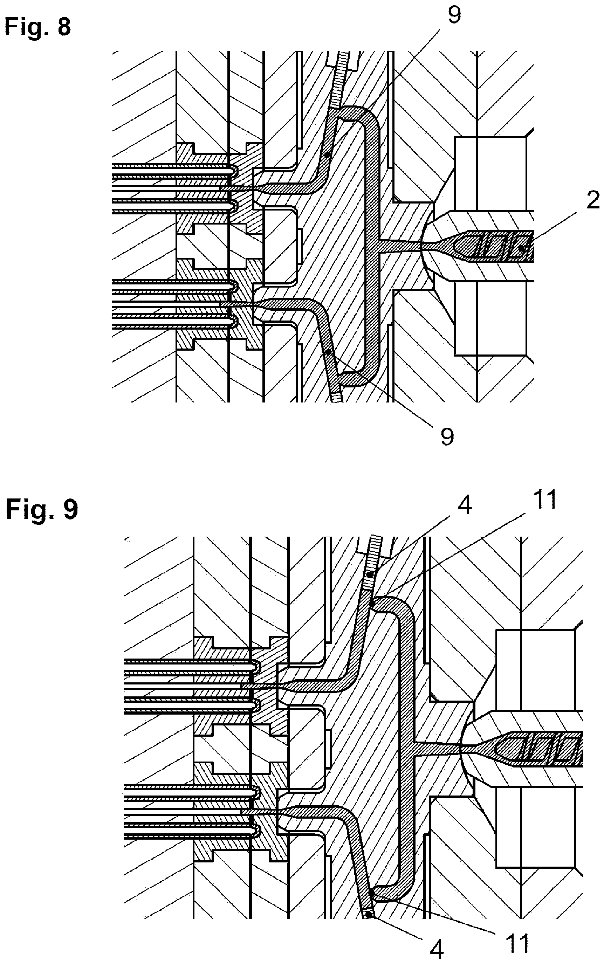

Anschließend wird weitere Schmelze von der Plastifiziereinheit 2 bereitgestellt, welche in die Schmelzezuleitung 8 gedrückt wird. Durch den damit in der Schmelzezuleitung 8 erzeugten Druck wird dann an den Kanalmündungen 11 befindliche Schmelze in die Dosierleitungen 9 gefördert, womit die Abschnitte 9a der Dosierleitungen 9 mit Schmelze gefüllt werden. In der Darstellung in **Fig. 7** ist bereits ein Teil des Abschnitte 9a der Dosierleitungen 9 wieder mit Schmelze aus der Schmelzezuleitung befüllt. Durch eine weitere Förderung durch die Plastifiziereinheit 2 wird weitere Schmelze zugeführt, bis die Abschnitte 9a und damit die Dosierleitung 9 wieder vollständig befüllt sind (vgl. **Fig. 8**). Nach der vollständigen Befüllung der Dosierleitungen 9 herrscht durch die Förderung der Plastifiziereinheit 2 in der Schmelze ein Überdruck.

Gemäß **Fig. 9** werden zum Abbau des in den Dosierleitungen 9 herrschenden Überdrucks die Kolben 4 nun in ihre erste Kolbenstellung überführt und damit weiter von der jeweiligen Kanalmündung 11 wegbewegt.

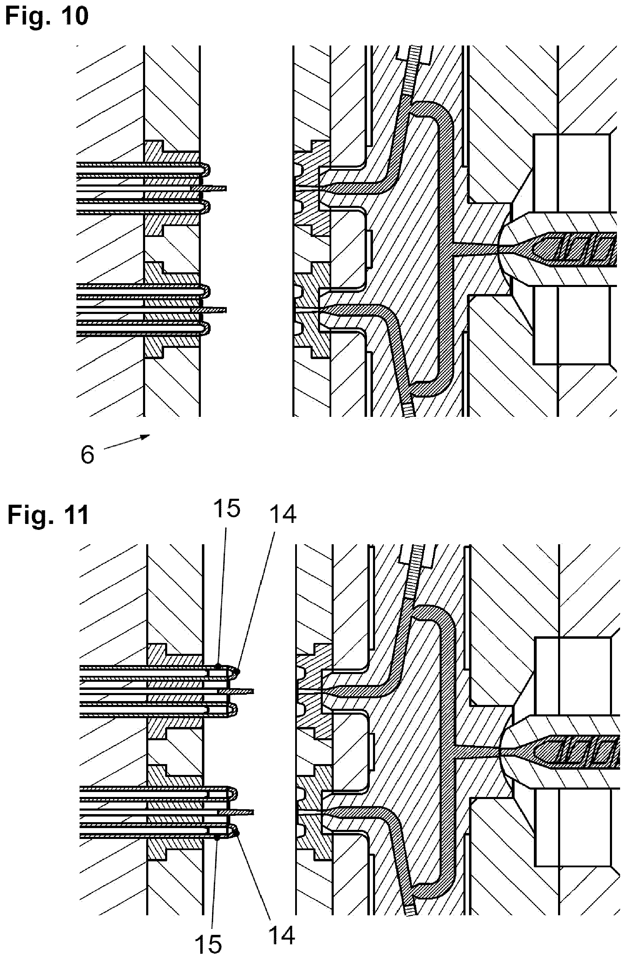

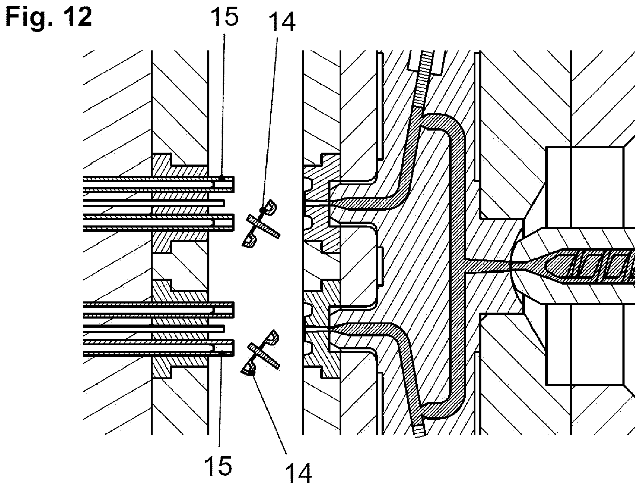

Nach der Verringerung des Überdrucks in den Dosierleitungen 9 wird das Werkzeug 6 geöffnet (vgl. **Fig. 10**) und die in den Kavitäten 6c gebildeten Formteile 14 werden über eine Auswurfvorrichtung 15 aus dem Werkzeug ausgeworfen (vgl. **Fig. 11** und **Fig. 12**). Nach dem Zurückfahren der Auswurfvorrichtung 15 ist der Zustand gemäß **Fig. 2** wieder erreicht und ein weiterer Zyklus zur Bildung weiterer Formteile 14 kann nach demselben Schema ausgeführt werden.

Der Innenquerschnitt der Dosierleitungen 9 weist eine Ausdehnung von 2 mm bis 7 mm, vorzugsweise 3 mm bis 5 mm auf. Allerdings ist die Erfindung nicht hierauf beschränkt.

Die Erfindung ist nicht auf eine Vorrichtung mit zwei Kolbenspritzeinheiten 3 für zwei Kavitäten 6c des Werkzeuges 6 beschränkt. Es können auch Werkzeuge 6 mit mehr als zwei Kavitäten 6c genutzt werden, wobei dann für jede Kavität 6c eine Dosierleitung 9 und eine Kolbenspritzeinheit 3 mit Kolben 4 vorgesehen wird. Beispielsweise kann das Werkzeug 12 oder 24 oder mehr Kavitäten 6c aufweisen.

Die voneinander unabhängige Ansteuerung der Einspritzantriebe sieht insbesondere vor, dass eine Geschwindigkeit der Kolbenhübe der Kolben und/oder ein Kolbenweg der Kolben zur Ausführung der Kolbenhübe bei den Kolbenspritzeinheiten unabhängig voneinander steuerbar ist.

### Bezugszeichenliste

- 1: Vorrichtung zum Mikrospritzgießen
- 2: Plastifiziereinheit
- 3: Kolbenspritzeinheit
- 4: Kolben
- 5: Kanalsystem
- 6: Werkzeug
- 6a: oberes Werkzeugteil
- 6b: unteres Werkzeugteil
- 6c: Kavität
- 7: Adapterplatte
- 8: Schmelzezuleitung
- 9: Dosierleitung
- 9a: Abschnitt der Dosierleitung
- 10: Schmelzeaustritt
- 11: Kanalmündung
- 12: Schmelzeintrittsöffnung
- 13: Schmelzeaustrittsöffnung
- 14: Formteil
- 15: Auswurfvorrichtung

## Patentansprüche

1. Vorrichtung (1) zum Mikrospritzgießen, aufweisend eine Plastifiziereinheit (2) mit einem Schneckenkolben, zumindest zwei Kolbenspritzeinheiten (3) mit je einem Kolben (4), ein Kanalsystem (5) als Schmelzeverteiler und ein Werkzeug (6) mit zumindest zwei Kavitäten (6c), wobei je eine Kolbenspritzeinheit (3) je einer Kavität (6c) zugeordnet ist und wobei das Kanalsystem (5) eine Schmelzezuleitung (8) und zumindest zwei Dosierleitungen (9) aufweist und wobei die Schmelzezuleitung (8) einen Schmelzeaustritt (10) der Plastifiziereinheit (2) mit den Kolbenspritzeinheiten (3) und je eine Dosierleitung (9) je eine der Kolbenspritzeinheiten (3) mit je einer der Kavitäten (6c) verbindet und wobei die Kolben (4) mit einem Kolbenhub von einer ersten Kolbenstellung in eine zweite Kolbenstellung bringbar sind und wobei zur Füllung der Kavitäten (6c) den Kolbenspritzeinheiten (3) über die Schmelzezuleitung (8) zugeführte Schmelze durch den Kolbenhub in der Dosierleitung (9) in Richtung Kavität (6c) förderbar ist, **dadurch gekennzeichnet, dass** die Schmelzezuleitung (8) jeweils direkt über eine Kanalmündung (11) in die Dosierleitungen (9) mündet und dass der Kolben (4) der der jeweiligen Dosierleitung (9) zugeordneten Kolbenspritzeinheit (3) in der Dosierleitung (9) angeordnet und beim Kolbenhub an einer Innenwand der Dosierleitung (9) geführt ist und dass ein bezogen auf die Kolbenbewegung senkrecht gelegter Außenquerschnitt des Kolbens (4) kongruent zu einem Innenquerschnitt der Dosierleitung (9) ausgeführt ist und an dem Innenquerschnitt der Dosierleitung (9) anliegt und dass ein der Kavität (6c) zugewandtes Kolbenende der Kolben (4) in ihrer ersten Kolbenstellung in Flussrichtung der Schmelze hinter der jeweiligen Kanalmündung (11) angeordnet ist und dass das der Kavität (6c) zugewandte Kolbenende der Kolben (4) in ihrer zweiten Kolbenstellung in Flussrichtung der Schmelze vor der Kanalmündung (11) angeordnet ist und dass beim Übergang der Kolben (4) von ihrer ersten Kolbenstellung in ihre zweite Kolbenstellung die jeweilige Kanalmündung (11) durch die Mantelfläche des Kolbens (4) verschlossen ist.

2. Vorrichtung (1) nach Anspruch 1, **dadurch gekennzeichnet,**
**dass** der Innenquerschnitt der Dosierleitung (9) eine Ausdehnung von 2 mm bis 7 mm, vorzugsweise 3 mm bis 5 mm, aufweist.

3. Vorrichtung (1) nach einem der vorgenannten Ansprüche, **dadurch gekennzeichnet, dass** die Schmelzezuleitung (8) an den Mündungen (11) zu den Dosierleitungen (9) in Richtung Dosierleitung (9) verjüngt ist.

4. Vorrichtung (1) nach einem der vorgenannten Ansprüche, **dadurch gekennzeichnet, dass** die Dosierleitungen (9) am Übergang zur Kavität (6c) in Richtung Kavität (6c) verjüngt sind.

5. Vorrichtung (1) nach einem der vorgenannten Ansprüche, **dadurch gekennzeichnet, dass** die Kolben (4) der Kolbenspritzeinheiten (3) von einzeln ansteuerbaren servoelektrischen Einspritzantrieben angetrieben sind.

6. Vorrichtung (1) nach Anspruch 5, **dadurch gekennzeichnet, dass** eine Geschwindigkeit der Kolbenhübe der Kolben (4) und/oder ein Kolbenweg der Kolben (4) zur Ausführung der Kolbenhübe bei den Kolbenspritzeinheiten (3) unabhängig voneinander steuerbar sind.

7. Adapterplatte (7) einer Vorrichtung nach einem der vorgenannten Ansprüche, **dadurch gekennzeichnet, dass** die Schmelzezuleitung (8), die Dosierleitungen (9) und die Kolben (4) in der Adapterplatte (7) integriert sind und dass eine Schmelzeintrittsöffnung (12) der Adapterplatte (7) mit dem Schmelzeaustritt (10) der Plastifiziereinheit (2) verbunden ist und dass ein der jeweiligen Kavität (6c) zugewandtes Ende der Dosierleitungen (9) eine mit der jeweiligen Kavität (6c) verbundenen Schmelzeaustrittsöffnung (13) der Adapterplatte (7) bildet.

8. Adapterplatte (7) nach Anspruch 7, **dadurch gekennzeichnet, dass** die Adapterplatte (7) mit der Schmelzezuleitung (8) und den Dosierleitungen (9) mittels generativer Fertigung gebildet ist.
